# EUROPEAN PATENT APPLICATION

(11) **EP 3 566 804 A1**
(43) Date of publication of application: **13.11.2019**
(21) Application number: 19173656.0
(22) Date of filing: 09.05.2019
(51) Int. Cl.: B23D 59/00, B23D 51/16

(54) **POWER TOOLS WITH CUTTING ELEMENT POSITION CONTROL**

(30) Priority: 10.05.2018 CN 201810443286
(71) Applicant: TTI (Macao Commercial Offshore) Limited, Macao (MO)
(72) Inventor: Yang, Ning, Guangdong (CN); Xie, Li Hua, Guangdong (CN); Li, Yong Min, Guangdong (CN)
(74) Representative: Williams, Annabel

(57) **Abstract**

The present invention relates to a power tool (10) and a method for controlling a stopping position of a cutting element (12) in the power tool (10), the power tool (10) including a cutting element (12), a sensor (28) arranged to detect a position of the cutting element (12), and a controller operably connected with the sensor (28) and the drive mechanism, for controlling a stopping position of the cutting element (12) based on the detection by the sensor (28). When changing the cutting element (12), it is desirable to stop the cutting element (12) at a higher position away from the object being cut, ideally the highest position. By utilizing a sensor (28) to detect a sensed object (34) in the cutting element (12), this method of control is automatic and reliable, allowing the user to change the cutting element (12) easily and efficiently.

## Description

### FIELD OF INVENTION

This invention relates to power tools and particularly, although not exclusively, to electrical saws with cutting element position control.

### BACKGROUND OF INVENTION

A power tool with a cutting element, such as a blade, often requires the user to change the cutting element. For example, in a jigsaw, the existing blade may wear out and become dull after a short period of time, or the user may wish to change to a different type of blade for cutting a different material or produce a different finish.

Depending on the different types of power tool, some blades are held in place by a screw that may be loosened when the users need to change the blade. Alternatively, some blades may be released from the blade clamp when a lever is disengaged, or through any other tool-less mechanisms.

It is desirable to position the blade at the highest position, away from the object being cut, such that the user can change the blade easier and prevent damaging the object. However, there is usually a delay between a user stopping the blade, e.g. by pressing the "off' power button, and the blade actually being stopped by the motor, hence the blade may end up being stopped in the middle of the reciprocating range.

### SUMMARY OF INVENTION

In the light of the foregoing background, it is an object to address the above needs, to overcome or substantially ameliorate the above disadvantages or, more generally, to provide a power tool with position control for changing the cutting element.

The above object is met by the combination of features of the main claims; the dependent claims disclose further advantageous embodiments of the invention.

One skilled in the art will derive from the following description other objects of the invention. Therefore, the foregoing statements of object are not exhaustive and serve merely to illustrate some of the many objects of the present invention.

Accordingly, the present invention, in one aspect is a power tool comprising a cutting element, a sensor arranged to detect a position of the cutting element, and a controller operably connected with the sensor and the drive mechanism, for controlling a stopping position of the cutting element based on the detection by the sensor. The power tool may further include a drive mechanism arranged to drive the cutting element.

Preferably, the power tool may further comprise an input module for receiving an input from a user to activate the detection by the sensor. The sensor may be arranged to detect a relative position between the sensor and a sensed object of the cutting element.

According to a variation of the preferred embodiments, the sensed object may be a magnet and it may be positioned on one end of the cutting element. The sensor may be a hall sensor and it may be positioned proximate to the sensed object of the cutting element at the stopping position.

More preferably, the sensor may detect the position of the cutting element when the sensed object of the cutting element moves within a measuring range of the sensor.

Additionally, the drive mechanism of the power tool may include a motor, and the motor may effectuate a reciprocating motion of the cutting element.

Preferably, upon the sensor detecting the cutting element at the stopping position, the drive mechanism may be arranged to brake the motor immediately.

Alternatively, upon the sensor detecting the cutting element at the stopping position, the drive mechanism may be arranged to brake the motor after a predetermined amount of rotation. The power tool may be a jigsaw.

In another aspect, the present invention is a method for controlling a stopping position of a cutting element in a power tool, comprising the steps of detecting a position of the cutting element by a sensor, transmitting the detected position to a controller and altering an operation of a drive mechanism for positioning the cutting element at the stopping position, wherein the drive mechanism is arranged to be controlled by the controller.

Preferably, the method may further comprise the step of receiving an input from a user to activate the detection by the sensor. The sensor may be arranged to detect a relative position between the sensor and a sensed object of the cutting element

According to a variation of the preferred embodiments, the sensed object may be a magnet and it may be positioned on one end of the cutting element. The sensor may be a hall sensor and it may be positioned proximate to the sensed object of the cutting element at the stopping position.

More preferably, the method may further comprise the step of detecting the position of the cutting element by the sensor when the sensed object of the cutting element moves within a measuring range of the sensor.

Additionally, the drive mechanism of the power tool may include a motor, and the motor may effectuate a reciprocating motion of the cutting element.

Preferably, the method may further include the step of braking the motor immediately upon detection of the cutting element at the stopping position.

Alternatively, the method may further include the step of braking the motor after a predetermined amount of rotation upon detection of the cutting element at the stopping position.

In one specific implementation, the power tool may be a jigsaw.

Other aspects of the invention will become apparent by consideration of the detailed description and accompanying drawings. Any feature or features described herein in relation to one aspect, embodiment or implementation may be combined with any other feature or features described herein in relation to any other aspect embodiment or implementation, as appropriate and applicable.

When changing the cutting element, it is desirable to stop the cutting element at a higher position away from the object being cut, ideally the highest position. By utilizing a sensor to detect a sensed object in the cutting element in the present invention, this method of control in a power tool is automatic and reliable, allowing the user to change the cutting element easily and efficiently.

### BRIEF DESCRIPTION OF FIGURES

The foregoing and further features of the present invention will now be described, by way of example, with reference to the accompanying drawings in which:
Fig. 1 shows a perspective view of a jigsaw according to one embodiment of the invention;
Fig. 2 shows a cross-sectional view of a portion of the jigsaw of Fig. 1;
Fig. 3a shows a schematic diagram of a portion of the jigsaw of Fig. 1 in one embodiment of the invention;
Fig. 3b shows a schematic diagram of a portion of a cutting element in one embodiment of the invention;
Fig. 4 shows a flow chart illustrating a method for controlling a stopping position of the cutting element in the jigsaw of Figs 1-3b in one embodiment of the invention.

### DETAILED DESCRIPTION OF THE PREFERRED EMBODIMENTS

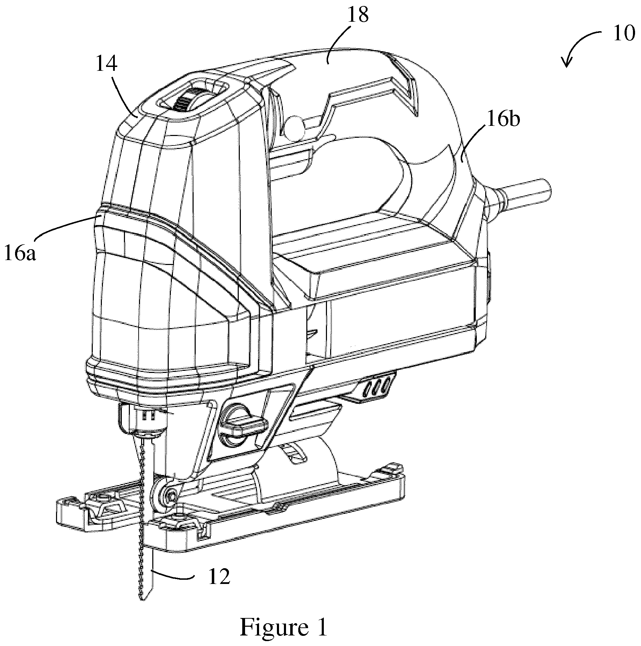

Figure 1 shows a perspective view of a power tool 10. In this illustrated embodiment, the power tool 10 is a jigsaw. The jigsaw 10 includes a housing 14, and further includes a drive mechanism (not shown), a controller (not shown) and a power supply (not shown) housed inside the housing 14, as well as a cutting element 12 for performing a cutting task. The housing 14 defines a longitudinal axis (not shown) that extends through a forward portion 16a and a rearward portion 16b. In addition, the housing 14 may also include a handle 18 extending generally centrally rearward 16b of the jigsaw 10, providing the user with an area to grip and hold the jigsaw 10 during operation.

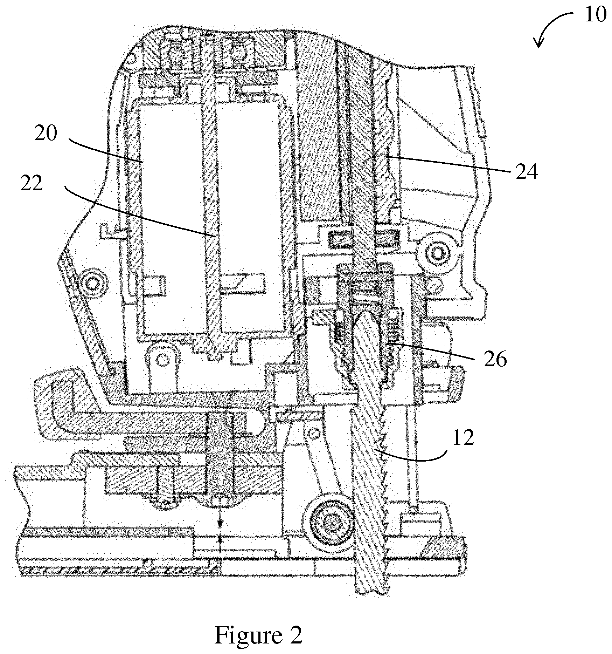

Referring now to Figure 2, which shows a cross-sectional view of a portion of the jigsaw 10 of Figure 1. The drive mechanism is arranged to drive the cutting element 12, preferably in a reciprocating motion. The drive mechanism contains a motor 20, wherein the motor 20 effectuates the reciprocating motion of the cutting element 12. Specifically, the motor 20 electrically connected and coupled to an output shaft 22 and a spindle 24, such that when powered, the motor 20 rotates the output shaft 22 about an axis. The jigsaw 10 further includes a clamp mechanism 26 coupled to the spindle 24 adjacent one end of the output shaft 22. The clamp mechanism 26 is configured to receive a cutting element 12 to drive the cutting element 12 in the reciprocating motion.

In one embodiment, a tool-less clamp mechanism 26 is arranged to receive the cutting element 12. In other embodiments, tooled mechanisms such as screws or other tool-less mechanisms may be used to receive the cutting element 12. In this example, the cutting element 12 includes a saw blade.

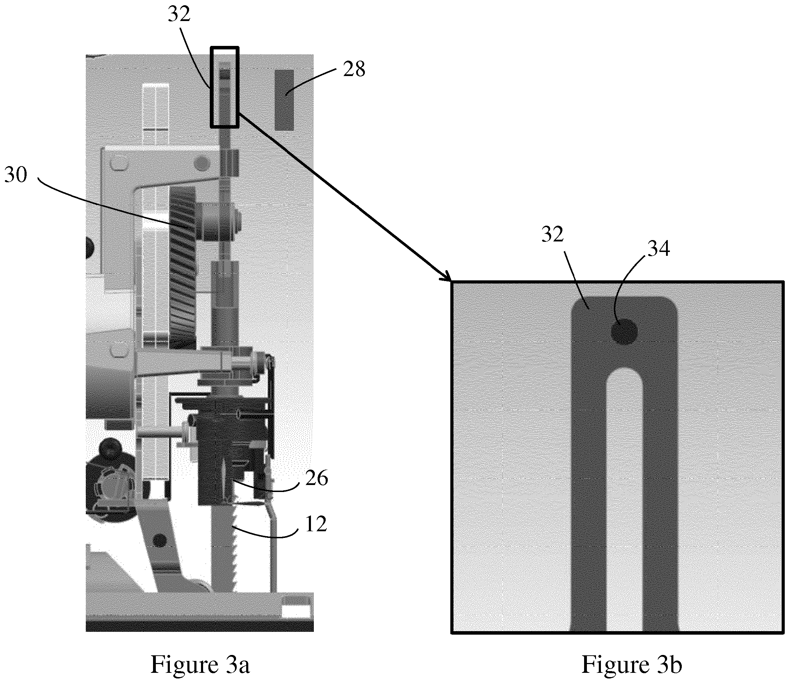

Figures 3a and 3b show respectively a schematic diagram of a portion of the jigsaw 10 of Figure 1 and a schematic diagram of a portion of the cutting element 12 in one embodiment of the invention. The jigsaw 10 further contains a sensor 28 arranged to detect a position of the cutting element 12, and a controller operably connected with the sensor 28 and the drive mechanism 30, for controlling a stopping position of the cutting element 12 based on the detection by the sensor 28. In this example, the sensor 28 is placed above the drive mechanism 30, on the right-hand side of the cutting element 12. Additionally, the jigsaw may include an input module (not shown) for receiving an input from a user to activate the detection by the sensor 28, such that the sensor 28 only detects the position of the cutting element 12 upon request by a user through the input module (not shown). In one example, the input module (not shown) may include a switch, operably connected to the controller for sending the input to the controller (not shown).

The sensor 28 is arranged to detect a relative position between the sensor 28 and a sensed object 34 of the cutting element 12, preferably within a measuring range of the sensor 28. In one example embodiment, the clamp mechanism 26 couples a saw bar 32 on one end, and receives a saw blade 12 on the other end. The sensed object 34 is a magnet being positioned on one end of the saw bar 32, preferably the highest end of the saw bar 32, whereas the sensor 28 is a hall sensor being positioned proximately to the magnet 34 of the saw bar 32 at the stopping position. The magnet 34 appears to be circular in this embodiment. Preferably, the stopping position is configured to be at the highest point in the reciprocating motion of the sensed object 34 of the saw bar 32. This provides the user an easier and more convenient, efficient manner to change the saw blade 12 when the saw bar 32 is stopped at the highest point.

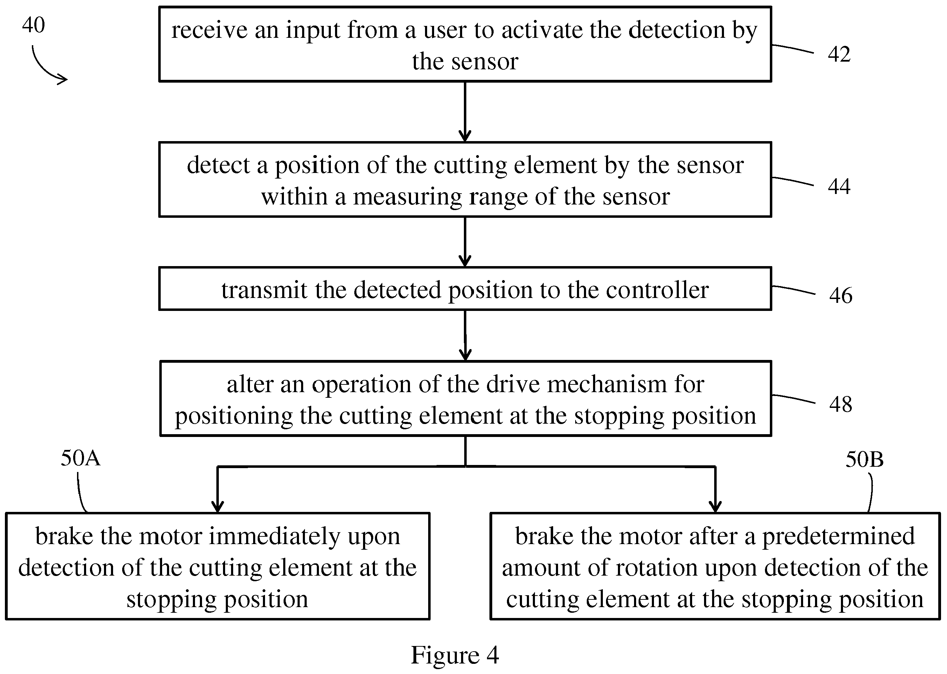

Figure 4 shows a flow chart illustrating an exemplary method 40 for controlling a stopping position of the cutting element 12 in the jigsaw 10 of Figures 1-3b in one embodiment of the invention. Note that the exemplary method described in this embodiment is not intended to be limiting, as the control of the stopping position may be realised using other methods, and/or with different sequences of the steps. In this embodiment, a user may first activate the detection by the sensor 28 at the input module, which is arranged to receive an input from the user in Step 42. The sensor 28 then detects the position of the cutting element 12 within a measuring range of the sensor 28 upon the activation in Step 44, and the detected position is transmitted to the controller in Step 46. In Step 48, the controller is then configured to alter an operation of the drive mechanism for positioning the cutting element 12 at the stopping position. More specifically, the drive mechanism may brake the motor 20 immediately upon detection of the cutting element 12 at the stopping position in Step 50A. Alternatively, the drive mechanism may brake the motor 20 after a predetermined amount of rotation upon detection of the cutting element 12 at the stopping position in Step 50B, such that the cutting element 12 can be ensured to be stopped at the stopping position, since there may be delays in sending the detected signals from the sensor to the controller, and from the controller to alter the operation of the drive mechanism. This method of control is automatic upon activation by the user, and the user may then easily change the cutting element 12.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the spirit and scope thereof, and, therefore, only such limitations should be imposed as are indicated by the appended claims.

Although not shown in the figures, but in other embodiments, the power tool 10 may be another type of tools or devices that comprises a cutting element 12, preferably moving in a reciprocating motion, such as a hammer drill, a sabre saw or the like. Similarly, the cutting element 12 may be other output tools, the sensor 28 may be placed at or below the drive mechanism 30, on the left-hand side, in front of, or behind the cutting element 12, and the sensed object may be a magnet 34 of rectangular, square shape, or the like. The sensor 28 may be an infrared sensor radiating infrared light beam, wherein the sensed object 34 is an object reflecting the infrared light beam, such that the infrared sensor detects the infrared light beam radiated from the sensed object 34 when the sensed object 34 is within the measuring range of the sensor 28.

According to embodiments illustrated above, the sensed object 34 moves in a reciprocating motion within the measuring range of the sensor 28, and the sensor 28 only detects the motion of the sensed object 34 once activated by a user. In other embodiments, the sensor 28 may be configured to be positioned above the highest point of the reciprocating motion of the sensed object 34. During operation, the sensed object 34 of the saw bar 32 moves in a reciprocating motion below the measuring range of the sensor 28. When the saw blade 12 needs to be changed, upon request by the user through the input module, the sensed object 34 of the saw bar 32 then moves within the measuring range of the sensor 28, thereby allowing the saw bar 32 to be positioned above the highest point of the normal reciprocating motion.

Terms such as "forward", "rearward", "in front of', "behind", "highest", "lowest" and similar terms as used herein are for the purpose of describing the invention in its normal in-use orientation and are not intended to limit the invention to any particular orientation.

Any reference to prior art contained herein is not to be taken as an admission that the information is common general knowledge, unless otherwise indicated.

## Claims

1. A power tool, comprising:
a cutting element;
a drive mechanism arranged to drive the cutting element;
a sensor arranged to detect a position of the cutting element; and
a controller operably connected with the sensor and the drive mechanism, for controlling a stopping position of the cutting element based on the detection by the sensor.

2. The power tool of claim 1, further comprises an input module for receiving an input from a user to activate the detection by the sensor.

3. The power tool of claim 1 or 2, wherein the sensor is arranged to detect a relative position between the sensor and a sensed object of the cutting element.

4. The power tool of claim 3, wherein the sensed object is a magnet being positioned on one end of the cutting element.

5. The power tool of claim 3 or 4, wherein the sensor is a hall sensor being positioned proximately to the sensed object of the cutting element at the stopping position.

6. The power tool of any one of claims 3, 4 or 5, wherein the sensor detects the position of the cutting element when the sensed object of the cutting element moves within a measuring range of the sensor.

7. The power tool of any preceding claim, wherein the drive mechanism includes a motor, and wherein the motor effectuates a reciprocating motion of the cutting element;
optionally, wherein upon the sensor detecting the cutting element being at the stopping position, the drive mechanism is arranged to brake the motor immediately or to brake the motor after a predetermined amount of rotation.

8. The power tool of any one of the preceding claims, wherein the power tool is a jigsaw.

9. A method for controlling a stopping position of a cutting element in a power tool, comprising the steps of:
detecting a position of the cutting element by a sensor;
transmitting the detected position to a controller; and
altering an operation of a drive mechanism for positioning the cutting element at the stopping position, wherein the drive mechanism is arranged to be controlled by the controller.

10. The method of claim 9, further comprises a step of receiving an input from a user to activate the detection by the sensor.

11. The method of claim 9 or 10, wherein the sensor is arranged to detect a relative position between the sensor and a sensed object of the cutting element.

12. The method of claim 11, wherein the sensed object is a magnet being positioned on one end of the cutting element.

13. The method of claim 11 or 12, wherein the sensor is a hall sensor arranged to be positioned proximately to the sensed object of the cutting element at the stopping position.

14. The method of any one of claims 11, 12 or 13, further comprises a step of detecting the position of the cutting element by the sensor when the sensed object of the cutting element moves within a measuring range of the sensor.

15. The method of any one of claims 9 to 14, wherein the drive mechanism includes a motor, wherein the motor effectuates a reciprocating motion of the cutting element;
optionally, wherein upon the sensor detecting the cutting element being at the stopping position, the drive mechanism is arranged to brake the motor immediately or to brake the motor after a predetermined amount of rotation.
